# FASCICULE DE BREVET EUROPEEN

(11) **EP 4 584 510 B1**
(45) Date de publication et mention de la délivrance du brevet: **24.06.2026**
(21) Numéro de dépôt: 23761817.8
(22) Date de dépôt: 23.08.2023
(51) Int. Cl.: F16C 11/06, F04D 17/04, F04D 29/26, F04D 25/08

(54) **MANCHON DE RECEPTION D'UNE ROTULE ACCUEILLANT UN ARBRE DE ROTATION D'UN ORGANE A PALES D'UN DISPOSITIF DE VENTILATION**
HÜLSE ZUR AUFNAHME EINES KUGELGELENKS ZUR AUFNAHME EINER DREHWELLE EINES BESCHAUFELTEN ELEMENTS EINER LÜFTUNGSVORRICHTUNG
SLEEVE FOR RECEIVING A BALL JOINT ACCOMMODATING A ROTATION SHAFT OF A BLADED MEMBER OF A VENTILATION DEVICE

(30) Priorité: 08.09.2022 FR 2208996
(43) Date de publication de la demande: 16.07.2025
(73) Titulaire: Valeo Electrification, 95892 Cergy Pontoise (FR)
(72) Inventeur: BLANCHARD, Jerome, 78322 Le Mesnil-Saint-Denis Cedex (FR); BOISSELLE, Patrick, 78322 Le Mesnil-Saint-Denis Cedex (FR); BRY, Samuel, 78322 Le Mesnil-Saint-Denis Cedex (FR); LEMERCIER, Philippe, 78322 Le Mesnil-Saint-Denis Cedex (FR); MONNET, Veronique, 78322 Le Mesnil-Saint-Denis Cedex (FR)
(74) Mandataire: Valeo Powertrain Systems
(86) Numéro de dépôt international: PCT/EP2023/073092
(87) Numéro de publication internationale: WO 2024/052122

(56) Documents cités:
- WO-A1-2019/007181
- DE-A1- 2 062 475
- FR-A- 1 268 353

## Description

### Domaine technique de l'invention

L'invention concerne un dispositif de ventilation comprenant un ensemble constitué d'un manchon et d'une rotule, le manchon de réception de la rotule accueillant un arbre de rotation d'un organe à pales du dispositif de ventilation.

L'invention se rapporte aussi à un procédé de montage du dispositif de ventilation.

Et enfin l'invention se rapport à un module de refroidissement pour véhicule automobile, comportant un tel dispositif de ventilation.

### Arrière-plan technique

Un module de refroidissement (ou module d'échange de chaleur) d'un véhicule automobile comporte classiquement au moins un échangeur de chaleur et un dispositif de ventilation adapté à générer un flux d'air au contact de l'échangeur de chaleur, à l'arrêt du véhicule ou à faible vitesse de roulage.

Dans les véhicules automobiles à moteur thermique classique, l'échangeur thermique est placé en regard d'au moins deux baies de refroidissement, formées dans la face avant de la carrosserie du véhicule automobile. Une première baie de refroidissement est située au-dessus du pare-chocs tandis qu'une deuxième baie est située au-dessous du pare-chocs. Une telle configuration est préférée car le moteur thermique doit également être alimenté en air, l'admission d'air du moteur étant classiquement située dans le passage du flux d'air traversant la baie de refroidissement supérieure.

Cependant, les véhicules électriques sont de préférence munis d'une unique baie de refroidissement située sous le pare-chocs.

En effet, le moteur électrique n'a pas besoin d'être alimenté en air. Et la diminution du nombre de baies de refroidissement permet d'améliorer les caractéristiques aérodynamiques du véhicule électrique. Ceci se traduit également par une meilleure autonomie et une plus grande vitesse de pointe du véhicule automobile.

Pour s'adapter à un nombre plus réduit de baies de refroidissement, il convient notamment d'utiliser un organe à pales tangentielles pour générer un chemin d'air vers l'échangeur à chaleur.

Cet organe à pales tangentielles est entraîné en rotation par le moteur électrique.

L'organe à pales est monté en rotation dans un carter. Un premier arbre s'étend depuis une première extrémité latérale de l'organe à pales et est relié au rotor du moteur. Un second arbre s'étend d'une seconde extrémité latérale de l'organe à pales.

Les deux arbres sont positionnés dans le carter de façon précise l'un par rapport à l'autre, le long d'un même axe, qui correspond à l'axe de rotation de l'organe à pales et du rotor.

Le premier arbre est monté dans un roulement disposé dans une portée cylindrique prévue à cet effet dans le carter de l'organe à pales. Le roulement est monté serré dans la portée de façon à guider correctement l'arbre.

Le second arbre est monté serré dans une rotule mobile en rotation dans un manchon élastomère monté serré dans le carter. La rotule permet de compenser un mauvais alignement du second arbre par rapport au premier arbre. Le manchon élastomère sert à filtrer les vibrations engendrées par la rotation des arbres et des pales.

Or le module de refroidissement, donc a fortiori le dispositif de ventilation avec le manchon et la rotule, est localisé sous le capot de la voiture, dans une zone à fort potentiel d'encrassement et de pollution. En effet, des saletés et de l'eau provenant de la route sont projetés par les pneumatiques dans cette zone lorsque le véhicule roule. Ainsi le carter peut avoir tendance à s'encrasser, tout comme l'arbre moteur. Or il n'est pas souhaitable que des saletés soient ramenées par l'arbre à l'intérieur du manchon, auquel cas la rotule ne pourra plus bouger correctement, et ne pourra plus remplir ses fonctions. En cas d'encrassement, les vibrations seront plus intenses car non absorbées par le manchon, le bruit généré par la rotation de l'arbre sera plus élevé, et tout désaxage de l'arbre pourrait engendrer une casse de l'arbre.

Des dispositifs de manchons avec rotule sont décrits, par exemple, dans les documents FR1268353A et DE2062475A1, et un dispositif de ventilation est décrit dans le document WO2019007181A1.

La présente invention vise à améliorer le dispositif de ventilation d'un véhicule automobile électrique, en proposant une solution innovante de protection du manchon contre l'encrassement à long terme, tout en permettant une insertion aisée de la rotule à l'intérieur du manchon.

### Résumé de l'invention

Ce but est atteint grâce à un dispositif de ventilation s'étendant selon une direction axiale X et comprenant :
- un organe à pales comprenant un carter de protection des pales composé d'une demi-coque inférieure assemblée à une demi-coque supérieure ;
- un moteur électrique comprenant un rotor entraînant en rotation ledit organe à pales via un premier arbre d'axe X s'étendant d'une première extrémité de l'organe à pales ;

l'organe à pales comprenant un second arbre d'axe X s'étendant d'une seconde extrémité de l'organe à pales et étant monté dans un ensemble comprenant un manchon de réception d'une rotule accueillant ledit second arbre de rotation de l'organe à pales du dispositif de ventilation, ledit manchon comprenant :
   - une paroi externe cylindrique se développant autour d'un axe central X et définissant un espace interne ;
   - une face arrière ouverte ;
   - une face avant d'accueil de l'arbre ;
   - une jupe interne reliée à la paroi externe et définissant un logement apte à accueillir la rotule, le logement étant partiellement sphérique et présentant une ouverture avant débouchant sur la face avant, ladite ouverture avant étant apte à accueillir l'arbre ;
la rotule étant mobile en rotation à l'intérieur du logement, la rotule épousant la forme intérieure du logement ;
ledit manchon comportant des moyens d'étanchéité du logement au niveau de l'ouverture avant et l'arbre étant inséré dans le manchon par sa face avant et monté serré dans la rotule, l'arbre étant en contact étanche avec des moyens d'étanchéité prévus sur la face avant du manchon.

Le manchon se caractérise à titre principale en ce qu'il comporte des moyens d'étanchéité du logement au niveau de l'ouverture avant.

L'idée principale de cette invention consiste à étanchéifier l'ouverture avant du logement dans lequel se trouve la rotule. De cette manière, aucune saleté ni humidité ne peut pénétrer à l'intérieur du logement via l'ouverture prévue pour accueillir l'arbre.

Il est impératif de conserver un logement propre pour que la rotule puisse correctement bouger à l'intérieur, grâce à la lubrification prévue à cet effet.

Un lubrifiant dans lequel se mélangent des salissures ou de l'humidité ne peut plus remplir sa fonction de lubrification, et il faut alors périodiquement démonter l'arbre du manchon, le manchon du carter, et enfin la rotule du manchon, pour pouvoir nettoyer le logement et remettre du lubrifiant propre.

Une telle opération de maintenance n'est plus nécessaire grâce aux moyens d'étanchéité prévus au niveau de l'ouverture avant du logement.

Selon les différents modes de réalisation de l'invention, qui pourront être pris ensemble ou séparément :
- lesdits moyens d'étanchéité du logement consistent en une lèvre annulaire s'étendant de la jupe et apte à venir au contact de l'arbre.
- le manchon comporte des moyens d'étanchéité avec un carter de protection de l'organe à pales.
- lesdits moyens d'étanchéité avec le carter de protection consistent en au moins une protubérance radiale s'étendant depuis la surface extérieure de la paroi externe et faisant le tour complet de la paroi externe.
- le manchon comporte des moyens d'insertion de la rotule par sa face arrière.
- lesdits moyens d'insertion de la rotule consistent en une ouverture arrière prévue dans le logement et débouchant sur l'espace interne et la face arrière ouverte.
- l'ouverture arrière est coaxiale à l'ouverture avant, selon l'axe X.
- le manchon est conçu en une seule pièce dans un matériau élastomère.

De préférence, la jupe interne présente une extrémité arrière flexible délimitant ladite ouverture arrière et dimensionnée pour pouvoir insérer la rotule par déformation élastique.

Selon l'invention, la jupe interne présente une extrémité avant délimitant ladite ouverture avant et étant dotée d'un resserrement dimensionné pour pouvoir insérer l'arbre et pour retenir la rotule dans le logement, ledit resserrement supportant les moyens d'étanchéité du logement.

De façon avantageuse, le carter comporte une chambre cylindrique d'accueil du manchon enveloppant la paroi externe du manchon, ladite au moins une protubérance radiale étant comprimée contre le carter après sa fermeture.

De façon avantageuse, le dispositif de ventilation comporte des moyens de blocage axial du manchon par rapport au carter fermé.

Selon une possibilité, ces moyens de blocage axial consistent en :
- un épaulement réalisé sur la paroi externe du manchon, de façon à réduire le diamètre extérieur du manchon au niveau de sa face avant ;
- au moins une patte s'étendant perpendiculairement à l'axe X depuis la surface intérieure du carter et apte à venir en butée contre l'épaulement lors de tout mouvement axial du manchon vers l'organe à pales.

L'invention concerne également un procédé de montage d'un dispositif de ventilation tel que décrit précédemment. Ce procédé comprend les étapes suivantes :
- insertion de la rotule dans le logement du manchon via la face arrière du manchon et l'ouverture arrière du logement, par translation axiale selon la direction de l'axe X dans un premier sens ;
- insertion de l'arbre dans le manchon via la face avant du manchon et l'ouverture avant du logement, puis montage serré de l'arbre dans la rotule, par translation axiale selon la direction de l'axe X dans un second sens opposé au premier sens ;
- fermeture du carter par assemblage de la demi-coque supérieure sur la demi-coque inférieure de façon à comprimer une protubérance radiale d'étanchéité prévue sur la paroi externe du manchon.

Enfin, l'invention concerne un module de refroidissement pour véhicule automobile, comportant un dispositif de ventilation tel que décrit précédemment, et au moins un échangeur de chaleur placé dans le chemin de l'air généré par le dispositif de ventilation.

### Brève description des figures

D'autres caractéristiques et avantages de l'invention apparaitront au cours de la lecture de la description détaillée qui va suivre pour la compréhension de laquelle on se reportera aux dessins annexés dans lesquels :
La figure 1 est une vue en perspective et partiellement en coupe d'un module de refroidissement pour véhicule automobile électrique ;
La figure 2 est une vue de détail en coupe d'une extrémité du dispositif de ventilation du module de refroidissement selon la figure 1 ;
La figure 3 est une vue éclatée en coupe d'un manchon selon l'art antérieur dans lequel s'insèrent une rotule et un arbre ;
La figure 4 est une vue en perspective du manchon de la figure 3 ;
La figure 5 est une vue éclatée en coupe d'un manchon selon une première configuration possible de l'invention dans lequel s'insèrent une rotule et un arbre ;
La figure 6 est une vue éclatée en coupe d'un manchon selon une seconde configuration possible de l'invention dans lequel s'insèrent une rotule et un arbre ;
La figure 7 est une vue en perspective du manchon de la figure 6.

### Description détaillée de l'invention

Dans la suite de la description, des éléments présentant une structure identique ou des fonctions analogues seront désignés par des mêmes références.

Dans la suite de la description, on adoptera de manière non limitative - et sans référence à la gravité terrestre - des orientations axiales et radiales.

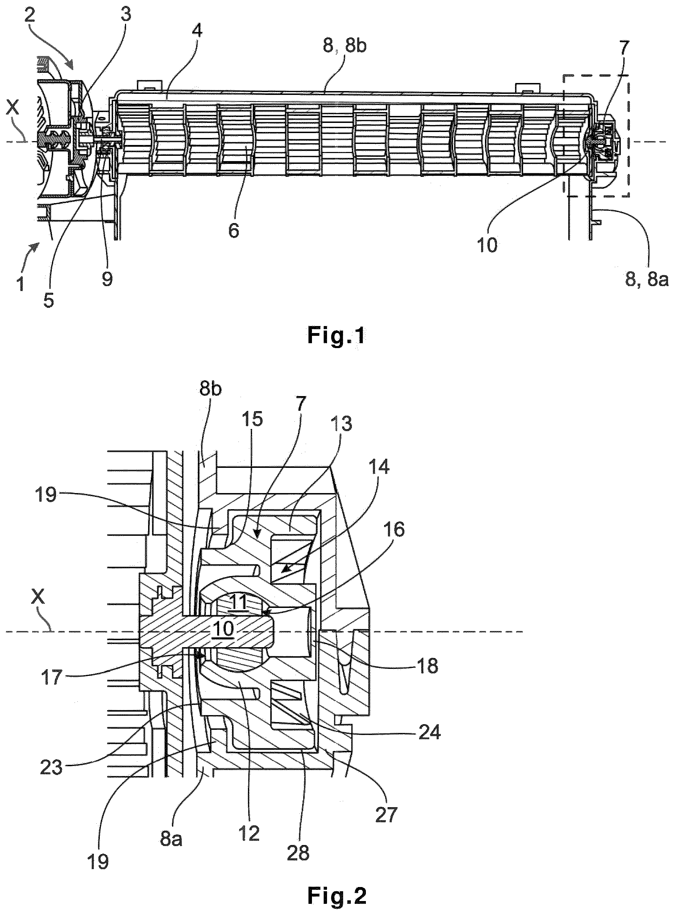

Par convention, la direction « axiale » correspond à celle d'extension principale du dispositif de ventilation illustrée par l'axe X sur la figure 1, et la direction « radiale » est orthogonale à la direction axiale.

De la même manière, les termes « extérieur ou externe » et « intérieur ou interne » sont utilisés en référence à la direction radiale, un élément extérieur étant radialement plus éloigné de l'axe X qu'un élément intérieur.

La figure 1 décrit de manière générale un module de refroidissement 1 d'un véhicule automobile, notamment à moteur électrique.

Tel qu'illustré sur cette figure 1, le module de refroidissement 1 comporte un dispositif de ventilation 2.

Ce dispositif de ventilation 2 s'étend axialement selon l'axe X et comporte un moteur 3 électrique associé à un organe à pales 4, ce dernier générant un chemin d'air vers un échangeur de chaleur (non représenté) situé sous l'organe à pales 4.

La connexion entre le moteur 3 électrique et l'organe à pales 4 s'effectue via un premier arbre 5 s'étendant du rotor du moteur 3 et entraînant en rotation l'organe à pales 4.

Les pales 6 sont orientées tangentiellement à l'axe X qui correspond à l'axe de rotation de l'organe à pales 4.

Pour protéger les pales 6, le dispositif de ventilation 2 comporte un carter 8 de protection composée d'une demi-coque inférieure 8a et d'une demi-coque supérieure 8b.

Les demi-coques 8a, 8b sont aptes à être emboîtées l'une dans l'autre pour fermer le carter 8. La demi-coque inférieure 8a fait office de support, et la demi-coque supérieure 8b fait office de couvercle.

Le premier arbre 5 de rotation s'étend entre une première extrémité latérale du dispositif de ventilation 2 et le rotor du moteur 2. Ce premier arbre 5 est maintenu en position dans une portée du carter 8 grâce à un roulement 9.

L'organe à pales 4 comporte un second arbre 10 de rotation s'étendant d'une seconde extrémité latérale du dispositif de ventilation 2, ce second arbre 10 étant relié à un manchon 7 élastomère servant à filtrer les vibrations engendrées par la rotation de ce second arbre 10 et des pales 6, et servant également à compenser tout désaxage de ce second arbre 10 par rapport au premier arbre 5.

La figure 2 montre plus précisément la connexion entre le second arbre 10 et le manchon 7.

Sur cette figure 2, il s'agit d'un manchon 7 selon l'art antérieur.

Ce manchon 7 est logé à l'intérieur d'une chambre 28 cylindrique d'accueil prévue à cet effet dans le carter 8. Ainsi, la demie coque supérieure 8b forme la moitié de cette chambre 28, et la demie coque inférieure 8a forme l'autre moitié de cette chambre 28.

Le manchon 7 comporte un logement 16 partiellement sphérique dans lequel se trouve une rotule 11 lubrifiée qui est libre de bouger en rotation à l'intérieur du logement 16. Le second arbre 10 est monté serré dans la rotule 11 de façon à ce que la rotule 11 tourne avec l'arbre 10 à l'intérieur du logement 16 du manchon 7.

Le manchon 7 comporte :
- une face dite « avant » 23 d'accueil de l'arbre 10,
- et une face dite « arrière » 24 opposée à la face avant 23, et située en vis-à-vis du fond de la chambre 28 du carter 8.

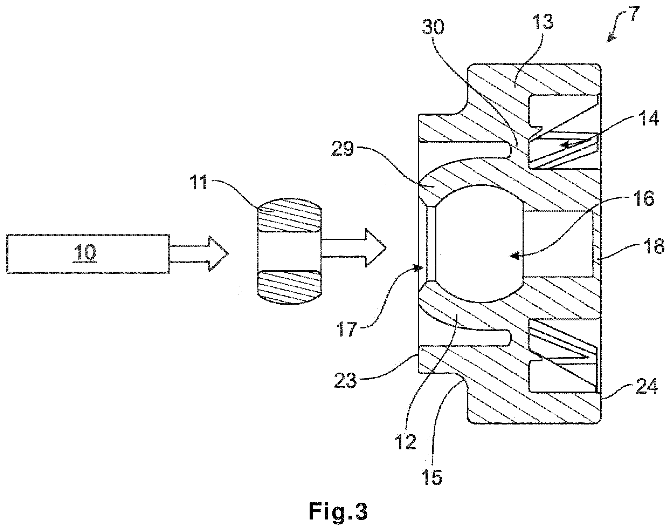

Comme cela est illustré en figure 3, l'ordre de montage est le suivant :
- insertion de la rotule 11 à l'intérieur du manchon 7 via une ouverture avant 17 prévue dans le logement 16 d'accueil, dans une direction axiale d'axe X ;
- insertion du second arbre 10 à l'intérieur du logement 16 via l'ouverture avant 17, puis à l'intérieur de la rotule 11, dans une direction axiale d'axe X.

La rotule 11 et le second arbre 10 sont insérés tous les deux via l'ouverture avant 17, le long de l'axe X, dans le même sens.

Ainsi, cette ouverture avant 17 doit être suffisamment grande pour pouvoir accueillir la rotule 11.

En l'espèce, le logement 16 est délimité par une jupe 12 interne se développant à l'intérieur du manchon 7. L'extrémité avant 29 de la jupe 12 délimite ainsi l'ouverture avant 17 du logement 16. Cette extrémité avant 29 est relativement flexible de façon à pouvoir se déformer pour introduire aisément la rotule 11 à l'intérieur du logement 16. L'extrémité arrière 18 de la jupe 12 est quant à elle fermée.

Le manchon 7 est une pièce de révolution creuse et comporte de manière générale une paroi externe 13 d'allure cylindrique définissant un espace interne 14.

De préférence, cette paroi externe 13 épouse la forme de la chambre 28 du carter 8, afin qu'il y ait un minimum de jeu entre le manchon 7 et le carter 8.

La jupe 12 interne se trouve dans l'espace interne 14 et est reliée à la paroi externe 13 du manchon 7 par une collerette 30 annulaire par exemple.

Le manchon 7 est réalisé en une pièce, par exemple par moulage.

Le manchon 7 est composé d'une matière élastique, du type élastomère, lui conférant ainsi une certaine flexibilité et lui permettant d'absorber les vibrations. Il peut, par exemple, être réalisé en EPDM ou encore en Chloroprène.

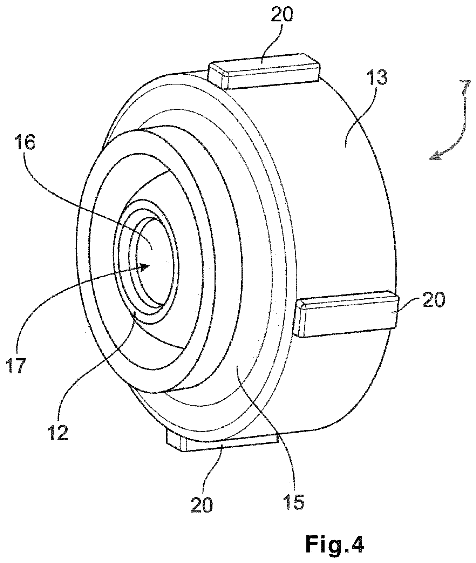

La figure 4 montre que la paroi externe 13 du manchon 7 est pourvue d'une pluralité de protubérances axiales 20 aptes à venir au contact de la paroi intérieure de la chambre 28 du carter 8, et notamment à être comprimées lors de la fermeture du carter 8, de façon à bloquer tout mouvement radial du manchon 7 à l'intérieur de la chambre 28.

Comme illustré en figure 2, pour bloquer tout mouvement axial du manchon 7 à l'intérieur de la chambre 28, il est prévu un épaulement 15 sur la paroi externe 13 du manchon 7, au voisinage d'une face avant 23 du manchon 7 dirigée vers l'organe à pales 4. Cet épaulement 15 engendre une réduction du diamètre du manchon 7. En parallèle, il est prévu au moins une patte ou rebord 19, s'étendant perpendiculairement à l'axe X depuis la surface intérieure de la chambre 28 du carter 8. Ainsi, l'épaulement 15 du manchon 7 est apte à venir en butée contre cette patte ou rebord 19 lors de tout mouvement axial du manchon 7 en direction de l'organe à pales 4. En outre, le manchon 7 est bloqué axialement dans l'autre sens car il est au contact du fond de la chambre 28 du carter 8.

Ainsi, le manchon 7 est bien maintenu en position à l'intérieur de la chambre 28 du carter 8, autant radialement qu'axialement.

L'inconvénient de ce manchon 7 selon l'art antérieur est que de la salissure et de l'humidité puissent pénétrer à l'intérieur du logement 16 où se trouve la rotule 11 empêchant dès lors un mouvement optimal de la rotule 11 au sein du logement 16, car des impuretés se trouvent alors dans l'huile de lubrification. De la même manière, de la salissure et de l'humidité peuvent pénétrer à l'intérieur de la chambre 28 du carter 8, notamment entre les protubérances axiales 20, et ainsi encrasser toute la chambre 28 et la partie arrière du manchon 7.

Cette salissure et l'humidité entraînent le besoin de réaliser des opérations de maintenance périodique pour nettoyer toute cette zone. Or cela n'est pas acceptable pour les propriétaires des voitures.

Le manchon 7 selon l'invention résout les problèmes susmentionnés.

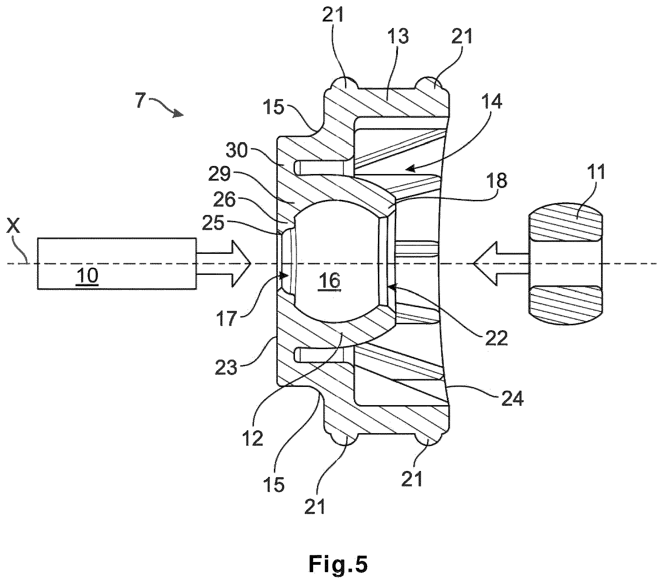

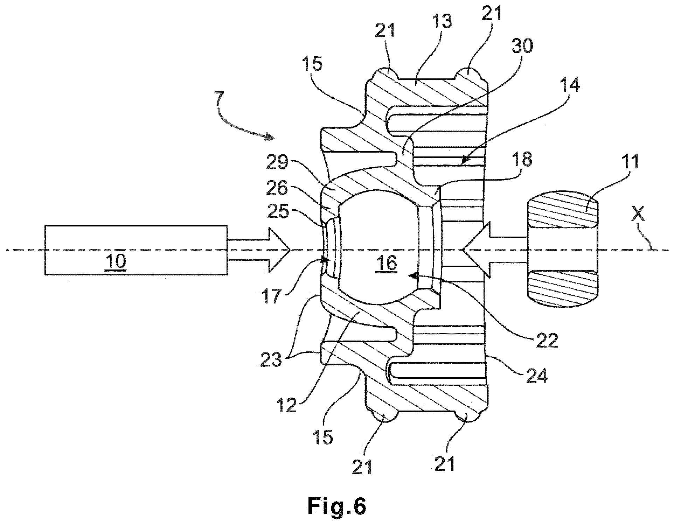

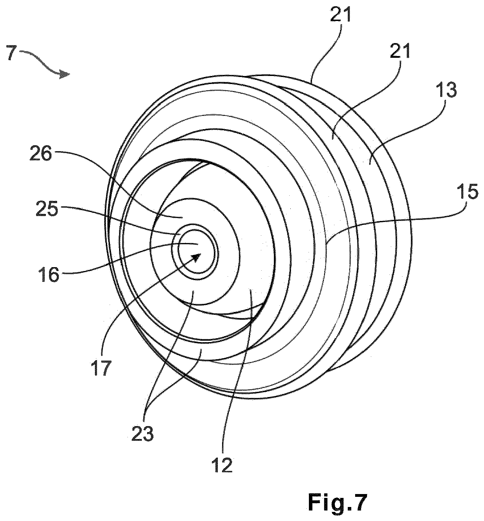

Le manchon 7 selon l'invention est illustré à la figure 5 selon un premier mode de réalisation, et aux figures 6 et 7 selon un second mode de réalisation.

Le manchon 7 selon l'invention tel que représenté sur les figures 5, 6 et 7 reprend tous les éléments décrits précédemment pour le manchon 7 de l'art antérieur des figures 2 à 4, à l'exception des protubérances axiales 20 et de l'extrémité arrière 18 de la jupe 12.

En effet, l'extrémité arrière 18 de la jupe 12 n'est plus fermée mais est ouverte. Ainsi, le logement 16 présente une ouverture avant 17 débouchant sur la face avant 23 du manchon 7, ainsi qu'une ouverture arrière 22 débouchant dans l'espace interne 14 du manchon 7.

Dans le manchon 7 selon l'invention, des améliorations ont été apportées pour résoudre les problèmes mentionnés.

Le problème principal est l'étanchéité du logement 16 dans lequel se trouve la rotule 11. Pour y faire face, la jupe 12 interne présente des moyens d'étanchéité du logement 16 au niveau de l'ouverture avant 17. Ces moyens d'étanchéité consistent en une lèvre 25 d'étanchéité annulaire bordant cette ouverture avant 17 et venant au contact de l'arbre 10 lors de son introduction dans le logement 16. Une étanchéité est ainsi réalisée entre la lèvre 25 et l'arbre 10 mis en place dans la rotule 11, empêchant dès lors toute salissure et toute humidité de pénétrer à l'intérieur du logement 16 via l'ouverture avant 17.

De façon avantageuse, pour éviter d'avoir une lèvre 25 trop large et trop flexible, il est prévu un resserrement 26 de l'extrémité avant 29 de la jupe 12 de façon à réduire le diamètre de l'ouverture avant 17 du logement 16. L'ouverture avant 17 présente ainsi un diamètre légèrement supérieur au diamètre de l'arbre 10, afin qu'il soit dimensionné au plus proche de l'arbre 10. La lèvre 25 annulaire est disposée à l'intérieur du resserrement 26, ce qui permet d'avoir une lèvre 25 moins large, moins flexible et plus efficace pour assurer l'étanchéité.

La lèvre 25 est en contact étanche avec l'arbre 10.

Cependant, ce resserrement 26 ne permet plus d'introduire la rotule 11 par la face avant 23 du manchon 7 vu le diamètre réduit de l'ouverture avant 17.

C'est pourquoi l'extrémité arrière 18 de la jupe 12 présente une ouverture arrière 22 dimensionnée de façon à pouvoir accueillir la rotule 11 par déformation élastique. La rotule 11 est ainsi introduite à l'intérieur du logement 16 selon l'axe X mais dans le sens inverse par rapport à l'art antérieur. La rotule 11 rentre dans le manchon 7 par sa face arrière 24 pénètre à l'intérieur de l'espace interne 14, puis passe par l'ouverture arrière 22 de la jupe 12 pour arriver dans le logement 16.

Cette ouverture arrière 22 correspond ainsi à des moyens d'insertion de la rotule 11 par la face arrière 24 du manchon 7.

L'ouverture arrière 22 et l'ouverture avant 17 sont coaxiales selon l'axe X.

Une fois que la rotule 11 est insérée dans le manchon 7 et que l'arbre 10 est inséré dans la rotule 11 du manchon 7, l'ensemble est disposé sur la coque inférieure 8a du carter 8 puis la coque supérieure 8b du carter 8 vient s'emboîter sur la coque inférieure 8a pour fermer le carter 8.

Avec une telle ouverture arrière 22 du logement 16, on comprend qu'il est possible que de la salissure et de l'humidité qui passeraient entre le carter 8 et la paroi externe 13 du manchon 7, viendraient pénétrer ensuite à l'intérieur du manchon 7 par sa face arrière 24 puis à l'intérieur du logement 16 par l'ouverture arrière 22.

Afin d'éviter cela, les protubérances axiales 20 saillants de la paroi externe 13 du manchon 7 en direction du carter 8 ont été remplacées par au moins une protubérance radiale 21 saillant de la surface extérieure de la paroi externe 13 du manchon 7 en direction du carter 8. Ainsi cette protubérance radiale 21 fait le tour du manchon 7, et agit comme un joint d'étanchéité empêchant toute salissure et toute humidité de pénétrer à l'intérieur de la chambre 28, au-delà de cette protubérance radiale 21. De préférence, cette protubérance radiale 21 est plutôt disposée à l'avant du manchon 7.

De préférence, par précaution et pour assurer un équilibre dans le positionnement du manchon 7 dans la chambre 28, le manchon 7 est doté d'une première protubérance radiale 21 disposée au voisinage de la face avant 23 du manchon 7, juste en aval de l'épaulement 15, et d'une deuxième protubérance radiale 21 disposée au voisinage de la face arrière 24 du manchon 7. Ainsi, il y a deux barrières d'étanchéité mises en place entre le manchon 7 et le carter 8. Tout comme dans l'art antérieur, lors de la fermeture du carter 8, la paroi intérieure du carter 8 vient en appui contre les protubérances radiales 21 du manchon 7 de façon à les comprimer et à étanchéifier la chambre 28.

Vu la disposition radiale, il n'y a plus aucun interstice où de la salissure et de l'humidité pourraient pénétrer à l'intérieur de la chambre 28.

Sur la figure 5, la jupe 12 interne est reliée à la paroi externe 13 via une collerette 30 située sur la face avant 23 du manchon 7. Il s'agit d'une première configuration possible de l'invention.

Sur la figure 6, la jupe 12 interne est reliée à la paroi externe 13 via une collerette 30 située au milieu du manchon 7. Il s'agit d'une deuxième configuration possible de l'invention.

On comprend que d'autres configurations sont possibles pour relier la jupe 12 à la paroi externe 13, et qui rentrent dans le cadre de la présente invention.

Il est à noter que la forme du carter 8 avec sa chambre 28 accueillant le manchon 7 selon l'invention est identique à celle décrite pour la figure 2.

Les configurations montrées aux figures citées ne sont que des exemples possibles, nullement limitatifs, de l'invention qui est définie par les revendications ci-jointes.

## Revendications

1. Dispositif de ventilation (2) s'étendant selon une direction axiale X et comprenant :
- un organe à pales (4) comprenant un carter (8) de protection des pales (6) composé d'une demi-coque inférieure (8a) assemblée à une demi-coque supérieure (8b) ;
- un moteur (3) électrique comprenant un rotor entrainant en rotation ledit organe à pales (4) via un premier arbre (5) d'axe X s'étendant d'une première extrémité de l'organe à pales (4) ;
l'organe à pales (4) comprenant un second arbre (10) d'axe X s'étendant d'une seconde extrémité de l'organe à pales (4) et étant monté dans un ensemble comprenant un manchon (7) de réception d'une rotule (11) accueillant ledit second arbre (10) de rotation de l'organe à pales (4) du dispositif de ventilation (2), ledit manchon (7) comprenant :
- une paroi externe (13) cylindrique se développant autour d'un axe central X et définissant un espace interne (14) ;
- une face arrière (24) ouverte ;
- une face avant (23) d'accueil de l'arbre (10) ;
- une jupe (12) interne reliée à la paroi externe (13) et définissant un logement (16) apte à accueillir la rotule (11), le logement (16) étant partiellement sphérique et présentant une ouverture avant (17) débouchant sur la face avant (23), ladite ouverture avant (17) étant apte à accueillir l'arbre (10) ; la rotule (11) étant mobile en rotation à l'intérieur du logement (16), la rotule (11) épousant la forme intérieure du logement (16);
ledit manchon comportant des moyens d'étanchéité du logement (16) au niveau de l'ouverture avant (17) et l'arbre (10) étant inséré dans le manchon (7) par sa face avant (23) et monté serré dans la rotule (11), l'arbre (10) étant en contact étanche avec des moyens d'étanchéité prévus sur la face avant (23) du manchon (7).

2. Dispositif de ventilation (2) selon la revendication précédente, **caractérisé en ce que** lesdits moyens d'étanchéité du logement (16) consistent en une lèvre (25) annulaire s'étendant de la jupe (12) et apte à venir au contact de l'arbre (10).

3. Dispositif de ventilation (2) selon la revendication 1 ou 2, **caractérisé en ce que** le manchon (7) comporte des moyens d'étanchéité avec le carter (8) de protection de l'organe à pales (4).

4. Dispositif de ventilation (2) selon la revendication précédente, **caractérisé en ce que** lesdits moyens d'étanchéité avec le carter (8) de protection consistent en au moins une protubérance radiale (21) s'étendant depuis la surface extérieure de la paroi externe (13) et faisant le tour complet de la paroi externe (13).

5. Dispositif de ventilation (2) selon l'une des revendications précédentes, **caractérisé en ce que** le manchon (7) comporte des moyens d'insertion de la rotule (11) par sa face arrière (24).

6. Dispositif de ventilation (2) selon la revendication précédente, **caractérisé en ce que** lesdits moyens d'insertion de la rotule (11) consistent en une ouverture arrière (22) prévue dans le logement (16) et débouchant sur l'espace interne (14) et la face arrière (24) ouverte.

7. Dispositif de ventilation (2) selon la revendication précédente, **caractérisé en ce que** l'ouverture arrière (22) est coaxiale à l'ouverture avant (17), selon l'axe X.

8. Dispositif de ventilation (2) selon l'une des revendications précédentes, **caractérisé en ce que** le manchon (7) est conçu en une seule pièce dans un matériau élastomère.

9. Dispositif de ventilation (2) selon l'une des revendications précédentes prise en combinaison avec la revendication 4, **caractérisé en ce que** le carter (8) comporte une chambre (28) cylindrique d'accueil du manchon (7) enveloppant la paroi externe (13) du manchon (7), ladite au moins une protubérance radiale (21) étant comprimée contre le carter (8) après sa fermeture.

10. Dispositif de ventilation (2) selon l'une des revendications précédentes, **caractérisé en ce qu'**il comporte des moyens de blocage axial du manchon (7) par rapport au carter (8) fermé.

11. Dispositif de ventilation (2) selon la revendication précédente, **caractérisé en ce que** lesdits moyens de blocage axial consistent en :
- un épaulement (15) réalisé sur la paroi externe (13) du manchon (7), de façon à réduire le diamètre extérieur du manchon (7) au niveau de sa face avant (23) ;
- au moins une patte (19) s'étendant perpendiculairement à l'axe X depuis la surface intérieure du carter (8) et apte à venir en butée contre l'épaulement (15) lors de tout mouvement axial du manchon (7) vers l'organe à pales (4).

12. Procédé de montage d'un dispositif de ventilation (2) selon l'une des revendications 1 à 11, **caractérisé en ce qu'**il comprend les étapes suivantes :
- insertion de la rotule (11) dans le logement (16) du manchon (7) via la face arrière (24) du manchon (7) et l'ouverture arrière (22) du logement (16), par translation axiale selon la direction de l'axe X dans un premier sens ;
- insertion de l'arbre (10) dans le manchon (7) via la face avant (23) du manchon (7) et l'ouverture avant (17) du logement (16), puis montage serré de l'arbre (10) dans la rotule (11), par translation axiale selon la direction de l'axe X dans un second sens opposé au premier sens ;
- fermeture du carter (8) par assemblage de la demi-coque supérieure (8b) sur la demi-coque inférieure (8a) de façon à comprimer une protubérance radiale (21) d'étanchéité prévue sur la paroi externe (13) du manchon (7).

13. Module de refroidissement (1) pour véhicule automobile, comportant un dispositif de ventilation (2) selon l'une quelconque des revendications 1 à 11, et au moins un échangeur de chaleur placé dans le chemin de l'air généré par le dispositif de ventilation (2).

## Patentansprüche

1. Belüftungsvorrichtung (2), die sich in einer axialen Richtung X erstreckt und umfasst:
- ein Schaufelelement (4), das ein Gehäuse (8) zum Schutz der Schaufeln (6) umfasst, bestehend aus einer unteren Halbschale (8a), die mit einer oberen Halbschale (8b) verbunden ist;
- einen elektrischen Motor (3), der einen Rotor umfasst, der das Schaufelelement (4) über eine erste Welle (5) mit Achse X in Rotation versetzt, die sich von einem ersten Ende des Schaufelelements (4) erstreckt;
- wobei das Schaufelelement (4) eine zweite Welle (10) mit Achse X umfasst, die sich von einem zweiten Ende des Schaufelelements (4) erstreckt und in einer Baugruppe montiert ist, die eine Hülse (7) zur Aufnahme eines Kugelgelenks (11) umfasst, das die zweite Welle (10) zur Rotation des Schaufelelements (4) der Belüftungsvorrichtung (2) aufnimmt, wobei die Hülse (7) umfasst:
- eine zylindrische Außenwand (13), die sich um eine zentrale Achse X entwickelt und einen inneren Raum (14) definiert;
- eine offene Rückseite (24);
- eine Vorderseite (23) zur Aufnahme der Welle (10);
- einen inneren Kragen (12), der mit der Außenwand (13) verbunden ist und einen Aufnahmeraum (16) definiert, der geeignet ist, das Kugelgelenk (11) aufzunehmen, wobei der Aufnahmeraum (16) teilweise kugelförmig ist und eine vordere Öffnung (17) aufweist, die in die Vorderseite (23) mündet, wobei die vordere Öffnung (17) geeignet ist, die Welle (10) aufzunehmen; wobei das Kugelgelenk (11) im Inneren des Aufnahmeraums (16) drehbar beweglich ist und das Kugelgelenk (11) sich an die Innenform des Aufnahmeraums (16) anpasst;
- wobei die Hülse Dichtungsmittel für den Aufnahmeraum (16) im Bereich der vorderen Öffnung (17) aufweist und die Welle (10) durch die Vorderseite (23) in die Hülse (7) eingeführt und fest im Kugelgelenk (11) montiert ist, wobei die Welle (10) in dichtem Kontakt mit Dichtungsmitteln steht, die an der Vorderseite (23) der Hülse (7) vorgesehen sind.

2. Belüftungsvorrichtung (2) nach dem vorhergehenden Anspruch, **dadurch gekennzeichnet, dass** die Dichtungsmittel des Aufnahmeraums (16) aus einer ringförmigen Lippe (25) bestehen, die sich vom Kragen (12) erstreckt und geeignet ist, mit der Welle (10) in Kontakt zu kommen.

3. Belüftungsvorrichtung (2) nach Anspruch 1 oder 2, **dadurch gekennzeichnet, dass** die Hülse (7) Dichtungsmittel mit dem Schutzgehäuse (8) des Schaufelelements (4) aufweist.

4. Belüftungsvorrichtung (2) nach dem vorhergehenden Anspruch, **dadurch gekennzeichnet, dass** die Dichtungsmittel mit dem Schutzgehäuse (8) aus mindestens einem radialen Vorsprung (21) bestehen, der sich von der Außenfläche der Außenwand (13) erstreckt und die Außenwand (13) vollständig umläuft.

5. Belüftungsvorrichtung (2) nach einem der vorhergehenden Ansprüche, **dadurch gekennzeichnet, dass** die Hülse (7) Mittel zur Einführung des Kugelgelenks (11) durch ihre Rückseite (24) aufweist.

6. Belüftungsvorrichtung (2) nach dem vorhergehenden Anspruch, **dadurch gekennzeichnet, dass** die Mittel zur Einführung des Kugelgelenks (11) aus einer hinteren Öffnung (22) bestehen, die im Aufnahmeraum (16) vorgesehen ist und in den inneren Raum (14) und die offene Rückseite (24) mündet.

7. Belüftungsvorrichtung (2) nach dem vorhergehenden Anspruch, **dadurch gekennzeichnet, dass** die hintere Öffnung (22) koaxial zur vorderen Öffnung (17) entlang der Achse X ist.

8. Belüftungsvorrichtung (2) nach einem der vorhergehenden Ansprüche, **dadurch gekennzeichnet, dass** die Hülse (7) als ein einziges Teil aus einem Elastomermaterial konzipiert ist.

9. Belüftungsvorrichtung (2) nach einem der vorhergehenden Ansprüche in Kombination mit Anspruch 4, **dadurch gekennzeichnet, dass** das Gehäuse (8) eine zylindrische Kammer (28) zur Aufnahme der Hülse (7) aufweist, die die Außenwand (13) der Hülse (7) umhüllt, wobei der mindestens eine radiale Vorsprung (21) nach dem Schließen gegen das Gehäuse (8) gepresst wird.

10. Belüftungsvorrichtung (2) nach einem der vorhergehenden Ansprüche, **dadurch gekennzeichnet, dass** sie Mittel zur axialen Blockierung der Hülse (7) in Bezug auf das geschlossene Gehäuse (8) aufweist.

11. Belüftungsvorrichtung (2) nach dem vorhergehenden Anspruch, **dadurch gekennzeichnet, dass** die axialen Blockierungsmittel bestehen aus:
- einer Schulter (15), die an der Außenwand (13) der Hülse (7) ausgebildet ist, um den Außendurchmesser der Hülse (7) im Bereich ihrer Vorderseite (23) zu reduzieren;
- mindestens einer Lasche (19), die sich senkrecht zur Achse X von der Innenfläche des Gehäuses (8) erstreckt und geeignet ist, bei jeder axialen Bewegung der Hülse (7) in Richtung des Schaufelelements (4) gegen die Schulter (15) anzuschlagen.

12. Verfahren zur Montage einer Belüftungsvorrichtung (2) nach einem der Ansprüche 1 bis 11, **dadurch gekennzeichnet, dass** es die folgenden Schritte umfasst:
- Einführen des Kugelgelenks (11) in den Aufnahmeraum (16) der Hülse (7) über die Rückseite (24) der Hülse (7) und die hintere Öffnung (22) des Aufnahmeraums (16) durch axiale Verschiebung in Richtung der Achse X in einer ersten Richtung;
- Einführen der Welle (10) in die Hülse (7) über die Vorderseite (23) der Hülse (7) und die vordere Öffnung (17) des Aufnahmeraums (16), dann feste Montage der Welle (10) im Kugelgelenk (11) durch axiale Verschiebung in Richtung der Achse X in einer zweiten Richtung, die der ersten Richtung entgegengesetzt ist;
- Schließen des Gehäuses (8) durch Verbinden der oberen Halbschale (8b) mit der unteren Halbschale (8a), um einen radialen Dichtungsvorsprung (21) zu komprimieren, der an der Außenwand (13) der Hülse (7) vorgesehen ist.

13. Kühlmodul (1) für ein Kraftfahrzeug, das eine Belüftungsvorrichtung (2) nach einem der Ansprüche 1 bis 11 und mindestens einen Wärmetauscher umfasst, der im Luftweg angeordnet ist, der von der Belüftungsvorrichtung (2) erzeugt wird.

## Claims

1. Ventilation device (2) extending along an axial direction X and comprising:
- a blade unit (4) comprising a housing (8) protecting the blades (6) composed of a lower half-shell (8a) assembled to an upper half-shell (8b);
- an electric motor (3) comprising a rotor driving said blade unit (4) in rotation via a first shaft (5) of axis X extending from a first end of the blade unit (4);
- the blade unit (4) comprising a second shaft (10) of axis X extending from a second end of the blade unit (4) and being mounted in an assembly comprising a sleeve (7) for receiving a ball joint (11) accommodating said second shaft (10) for rotation of the blade unit (4) of the ventilation device (2), said sleeve (7) comprising:
- a cylindrical external wall (13) developing around a central axis X and defining an internal space (14);
- an open rear face (24);
- a front face (23) for receiving the shaft (10);
- an internal skirt (12) connected to the external wall (13) and defining a housing (16) capable of accommodating the ball joint (11), the housing (16) being partially spherical and having a front opening (17) leading to the front face (23), said front opening (17) being capable of accommodating the shaft (10); the ball joint (11) being rotationally mobile inside the housing (16), the ball joint (11) matching the interior shape of the housing (16);
- said sleeve having sealing means for the housing (16) at the front opening (17) and the shaft (10) being inserted into the sleeve (7) through its front face (23) and tightly mounted in the ball joint (11), the shaft (10) being in sealed contact with sealing means provided on the front face (23) of the sleeve (7).

2. Ventilation device (2) according to the preceding claim, **characterized in that** said sealing means of the housing (16) consist of an annular lip (25) extending from the skirt (12) and capable of coming into contact with the shaft (10).

3. Ventilation device (2) according to claim 1 or 2, **characterized in that** the sleeve (7) includes sealing means with the housing (8) protecting the blade unit (4).

4. Ventilation device (2) according to the preceding claim, **characterized in that** said sealing means with the protective housing (8) consist of at least one radial protrusion (21) extending from the outer surface of the external wall (13) and going completely around the external wall (13).

5. Ventilation device (2) according to one of the preceding claims, **characterized in that** the sleeve (7) includes means for inserting the ball joint (11) through its rear face (24).

6. Ventilation device (2) according to the preceding claim, **characterized in that** said means for inserting the ball joint (11) consist of a rear opening (22) provided in the housing (16) and leading to the internal space (14) and the open rear face (24).

7. Ventilation device (2) according to the preceding claim, **characterized in that** the rear opening (22) is coaxial with the front opening (17), along axis X.

8. Ventilation device (2) according to one of the preceding claims, **characterized in that** the sleeve (7) is designed as a single piece in an elastomer material.

9. Ventilation device (2) according to one of the preceding claims taken in combination with claim 4, **characterized in that** the housing (8) includes a cylindrical chamber (28) for receiving the sleeve (7) enveloping the external wall (13) of the sleeve (7), said at least one radial protrusion (21) being compressed against the housing (8) after its closure.

10. Ventilation device (2) according to one of the preceding claims, **characterized in that** it includes means for axially locking the sleeve (7) relative to the closed housing (8).

11. Ventilation device (2) according to the preceding claim, **characterized in that** said axial locking means consist of:
- a shoulder (15) made on the external wall (13) of the sleeve (7), so as to reduce the external diameter of the sleeve (7) at its front face (23);
- at least one tab (19) extending perpendicular to the X axis from the inner surface of the housing (8) and capable of abutting against the shoulder (15) during any axial movement of the sleeve (7) toward the blade unit (4).

12. Method for assembling a ventilation device (2) according to one of claims 1 to 11, **characterized in that** it comprises the following steps:
- inserting the ball joint (11) into the housing (16) of the sleeve (7) via the rear face (24) of the sleeve (7) and the rear opening (22) of the housing (16), by axial translation in the direction of the X axis in a first direction;
- inserting the shaft (10) into the sleeve (7) via the front face (23) of the sleeve (7) and the front opening (17) of the housing (16), then tightly mounting the shaft (10) in the ball joint (11), by axial translation in the direction of the X axis in a second direction opposite to the first direction;
- closing the housing (8) by assembling the upper half-shell (8b) on the lower half-shell (8a) so as to compress a radial sealing protrusion (21) provided on the external wall (13) of the sleeve (7).

13. Cooling module (1) for a motor vehicle, comprising a ventilation device (2) according to any one of claims 1 to 11, and at least one heat exchanger placed in the path of the air generated by the ventilation device (2).
